# EUROPÄISCHE PATENTSCHRIFT

(11) **EP 0 548 858 B1**
(45) Veröffentlichungstag und Bekanntmachung des Hinweises auf die Patenterteilung: **24.05.2000**
(21) Anmeldenummer: 92121642.0
(22) Anmeldetag: 18.12.1992
(51) Int. Cl.: G06K 19/18, B42D 15/10

(54) **Ausweiskarte sowie Verfahren und Vorrichtung zur Herstellung derselben**
Identity card as well as the method and device for its assembly
Carte d'identité ainsi que la méthode et le dispositif pour son assemblage

(30) Priorität: 20.12.1991 DE 4142408
(43) Veröffentlichungstag der Anmeldung: 30.06.1993
(73) Patentinhaber: GAO Gesellschaft für Automation und Organisation mbH, 81307 München (DE)
(72) Erfinder: Grun, Herbert, 85591 Vaterstetten (DE)
(74) Vertreter: Klunker . Schmitt-Nilson . Hirsch

(56) Entgegenhaltungen:
- EP-A- 0 101 968
- EP-A- 0 105 099
- EP-A- 0 350 179
- EP-A- 0 377 937
- WO-A-89/07219
- FR-A- 2 496 937
- US-A- 3 604 901
- US-A- 4 469 725

## Beschreibung

Die Erfindung betrifft eine in Spritzgußtechnik hergestellte Karte, insbesondere eine Ausweiskarte, Chipkarte oder dergleichen sowie ein Verfahren und eine Vorrichtung zur Herstellung derselben.

Im täglichen Leben haben sich in den vergangenen Jahrzehnten Karten in den unterschiedlichsten Anwendungsgebieten eingebürgert. Sie sind als Ausweiskarten, Identifikationskarten, Führerschein, Zugangskontrollkarten, Chipkarten, Kreditkarten, Scheckgarantiekarten und dergleichen im Gebrauch.

Bei der Entwicklung der Karten hat sich im Laufe der Zeit ein Trend durchgesetzt, demnach die erste Priorität auf einfache und preiswerte Herstellung der Karten gelegt wird. In diesem Sinne wurden die Karten von der ursprünglich hochwertigsten Papierinlettkarte zur sogenannten Vollplastik-Laminierkarte weiterentwickelt und von dieser zur Spritzgußkarte. Derartige Karten sind beispielsweise aus folgenden Veröffentlichungen bekannt DE-A-23 08 876, EP-A-0 101 968, EP-A-0 197 847.

Bei Papierinlettkarten wurden die aus der Wertpapierherstellung bekannten Techniken des Fälschungs- und Verfälschungsschutzes verwendet, um Papierinletts herzustellen, die zwischen Klarsichtfolien eingebettet einerseits den ästhetischen Eindruck eines Wertpapiers vermitteln, andererseits aber auch die visuelle und gegebenenfalls auch manuelle Überprüfung der bei Wertpapieren üblichen Echtheitsmerkmale ermöglichen.

Vollplastik-Laminierkarten sind, wie es der Name schon sagt, vollständig aus Kunststoffschichten aufgebaut. Das Inlett dieser Karten ist zwar in gewissen Grenzen mit gleichwertigen Druckbildern, wie Papierinlettskarten, auszustatten, das Vorsehen klassischer, für die Humanprüfung verwendbarer Echtheitsmerkmale ist jedoch, soweit überhaupt möglich, allein aus finanziellen Gründen nicht sinnvoll.

Bei Spritzgußkarten, die, wie übliche Spritzgußteile, in Spritzgußautomaten extrem preiswert hergestellt werden können, reduziert sich die Qualität des Druckbilds aus heutiger Sicht nochmal erheblich. Echte Vorteile ergeben sich somit lediglich bei der Herstellung von Chipkarten, da mit Hilfe der Spritzgußtechnik die für die Einbettung der Chipmodule benötigten Kartenvertiefungen bei der Herstellung des Kartenkörpers in einem Arbeitsgang mit hergestellt werden können oder sogar die Einbettung des Chipmoduls in den Kartenaufbau während des Spritzvorganges mit erfolgen kann.

Bei der Weiterentwicklung der Fertigungstechniken wurde somit zugunsten preiswerterer Fertigungsmethoden auf die Möglichkeit der humanen Echtheitsprüfung immer mehr verzichtet. Beim derzeitigen Stand der Spritzgußkarten ist, soweit es sich um Chipkarten handelt, zwar die elektronische Sicherheit der Karten durch Verwendung immer komplizierterer integrierter Schaltkreise nahezu beliebig steigerbar, der Kartenaufbau als solcher ist aber extrem einfach und somit für die rein visuelle Echtheitsüberprüfung wenig geeignet.

Die Aufgabe der Erfindung ist es daher, eine Karte sowie ein Verfahren und eine Vorrichtung zur Herstellung derselben vorzuschlagen, bei der neben den Gesichtspunkten der preiswerten Fertigung in hohen Stückzahlen auch der Sicherheitsaspekt hinsichtlich visueller Echtheitsüberprüfbarkeit ausreichend Berücksichtigung findet.

EP-A-0 101 968, das als nächster Stand der Technik angesehen wird, beschreibt eine Ausweiskarte, die verschiedene Schichten aufweist, die verschiedene Kunststoffkomponenten enthalten, welche wiederum visuell und meßtechnisch voneinander zu unterscheiden sind. Die Schichten werden durch Laminieren zummengefügt

Diese Aufgabe wird durch den Merkmalen der unabhängigen Ansprüchen 1, 9 und 11 gelöst.

Die Erfindung macht sich die Tatsache zunutze, daß beim heutigen Stand der Spritzgußtechnik sowohl die unterschiedlichsten Kunststoffkomponenten als auch Fremdkörper in Mehrstufenverfahren in nahezu beliebiger Anordnung und Kombination verarbeitbar sind. Nutzt man diese Möglichkeiten zur Herstellung eines Mehrkomponenten-Kartenaufbaus, so lassen sich damit ähnliche Humanmerkmale herstellen, wie sie aus der klassischen Wertpapiersicherungstechnik bekannt sind, ohne daß dabei der ursprünglich angestrebte Rationalisierungseffekt vernachlässigt wird.

Als besonders vorteilhaft erweist es sich, daß mit der Erfindung an die klassische Kartensicherungstechnik angeknüpft werden kann unter Nutzung zeitgemäßer Produktionstechnologien. Obwohl die erfindungsgemäße Karte die unterschiedlichsten visuell überprüfbaren Kartenstrukturen aufweisen kann, ist sie problemlos in gängige Spritzguß-Fertigungsverfahren zu integrieren. Neben den für die visuelle Echtheitüberprüfung vorgesehenen Karteneigenschaften sind auch weitere Maßnahmen vorsehbar, die die Weiterverarbeitung der Karten erleichtern bzw. die herstellungsbezogen weitere Rationalisierungseffekte beinhalten.

Weiterbildungen der Erfindung sowie weitere Vorteile derselben sind den anhand der Figur beschriebenen Ausführungsbeispielen zu entnehmen.

Es zeigen:
- Fig. 1: eine herkömmliche Chipkarte in Aufsicht,
- Fig. 2: eine erfindungsgemäße Mehrkomponenten-Spritzgußkarte mit einer visuell auswertbaren Echtheitsstruktur,
- Fig. 3 - 5: Schnittzeichnungen verschiedener Varianten des erfindungsgemäßen Kartenaufbaus,
- Fig. 6: die Schnittzeichnung eines Strukturelements zur weiteren Rationalisierung der Kartenfertigung,
- Fig. 7: die Prinzipskizze einer Vorrichtung zur Herstellung erfindungsgemäßer Karten,
- Fig. 8a - c: Schnittzeichnungen zur prinzipiellen Veranschaulichung des Aufbaues der Spritzgußwerkzeuge zur Herstellung des in Fig. 3 dargestellten Kartenaufbaus.

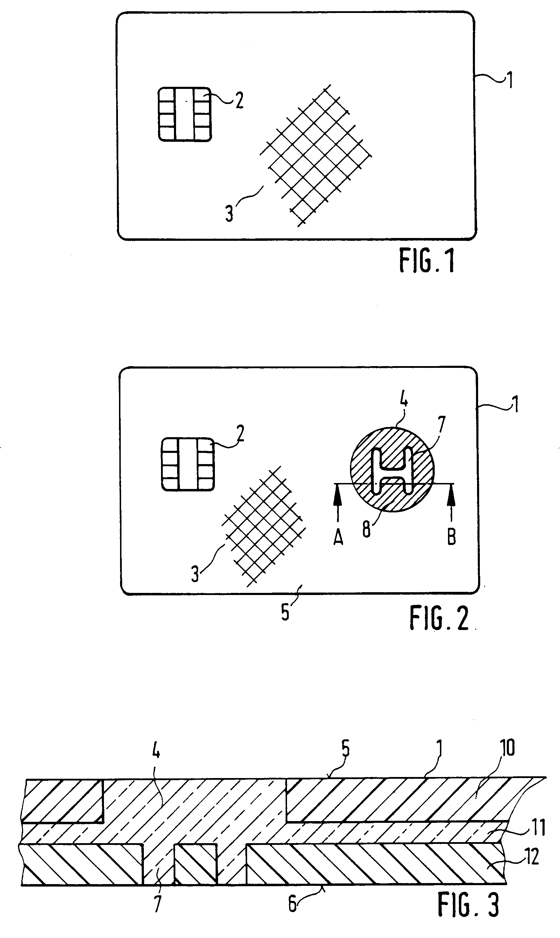

Fig. 1 zeigt eine herkömmliche Chipkarte 1 mit einem eingebetteten Chipmodul 2 und einem Druckbild 3 in schematischer Darstellung. Die Herstellung derartiger Karten erfolgt derzeit entweder in klassischer Laminiertechnik, d. h. durch miteinander Verschweißen mehrerer Kunststoffschichten und Einlagern des Chipmoduls während des Laminiervorganges oder durch Herstellen eines mehr- oder einschichtigen Kartenkörpers und Einfräsen einer Vertiefung, in die anschließend das Chipmodul eingesetzt werden kann. Als dritte und derzeit preiswerteste Technik wird der Kartenkörper in Spritzgußtechnik hergestellt, wobei während des Spritzvorganges entweder die Vertiefung, in die das Chipmodul einzusetzen ist, im Kartenkörper mit vorgesehen oder aber das Chipmodul selbst beim Spritzvorgang bereits mit in die Kunststoffmasse eingebettet wird. Die derzeit bekannten Spritzgußkarten weisen außerhalb des Bereichs, in dem das Chipmodul vorgesehen wird, keinerlei spritzgußtechnisch hergestellte Zusatzmerkmale auf, die eine visuelle oder maschinelle Echtheitsprüfung gestatten.

In Fig. 2 ist ein erfindungsgemäßer Kartenkörper 1 in vereinfachter Darstellung wiedergegeben. Dieser Kartenkörper kann sämtliche bisherigen Elemente üblicher Spritzgußkarten aufweisen, also ein Chipmodul 2 oder ein Druckbild 3. Darüber hinaus enthält er aber mindestens ein Spritzgußmerkmal 4, das dem Kartenkörper ein charakteristisches Gepräge gibt. Dieses Merkmal 4 ist auf einfache Weise visuell überprüfbar, in großen Stückzahlen rationell herstellbar, in Einzelstücken (Fälschungen) aber sehr schwierig nachzuahmen.

Das Spritzgußmerkmal 4, im vorliegenden Fall in Form eines in einer kreisrunden Fläche angeordneten Buchstaben "H", ist stellvertretend für ein beliebig strukturiertes Firmenlogo, Schrift- oder Bildzeichens. Im vorliegenden Fall ist der Kartenkörper 1 auf der Vorderseite mit einer weißen Kartenoberfläche versehen, gegen die sich die Kreisfläche 8 kontrastierend abhebt.

Fig. 3 zeigt den Schnitt A-B aus Fig. 2. Die Karte 1 ist demnach aus drei Schichten aufgebaut, wobei die die Vorderseite bildende Schicht 10 weiß, die rückseitige Schicht 12 schwarz und die Mittelschicht transparent ausgeführt ist. Die Vorderschicht 10 und die rückseitige Schicht 12 weisen jeweils Aussparungen auf, die ebenfalls mit dem transparenten Kunststoffmaterial der mittleren Schicht ausgefüllt sind. Die Aussparung auf der Vorderseite ist kreisförmig ausgebildet. Sie schafft somit die Umrißkontur des Spritzgußmerkmals 4. Die Aussparungen in der rückseitigen Deckschicht 12 sind in Form des Bildzeichens 7 ausgeführt, so daß das Bildzeichen 7 als transparentes "H" in schwarzem Umfeld erkennbar ist.

Die Prüfung eines derartigen Merkmals 4 kann nun in drei Schritten erfolgen, nämlich im Durchlicht von der Vorderseite her. Bei dieser Prüfung erkennt man ein durch die gesamte Kartendicke verlaufendes transparentes Zeichen 7, das im tieferliegenden schwarzen Kartenhintergrund eingebettet ist. Rückseitig ist das Zeichen 7 im vollflächig schwarzen Hintergrund angeordnet. Betrachtet man die Seitenkanten der Karte, so ist der Dreischichtaufbau aufgrund der stark kontrastierenden Schichten ebenfalls gut erkennbar. Mit Hilfe von Biegeversuchen zeigt sich, ob der Kartenaufbau und insbesondere die beiden Kartenoberflächen nahtlos und homogen ausgeführt sind.

Soll die Sicherheit dieses Kartenaufbau weiter erhöht werden, so kann während der Kartenherstellung in der Oberfläche der Kartenrückseite zusätzlich ein Hologrammrelief vorgesehen werden. Dieses Relief kann separat im Transferverfahren aufgebracht sein oder durch Vorsehen eines derartigen Reliefs in der Spritzgußform beim Spritzvorgang mit abgeprägt werden.

Ein derartiges auf der Kartenseite 6 plaziertes Hologrammrelief ist bei entsprechender Beleuchtung von der Rückseite her über die gesamte Fläche, d. h. sowohl im schwarzen Kartenbereich als auch im Bereich des Zeichens 7 gut erkennbar. Inhomogenitäten, die durch Zusammenstückeln verschiedener Kartenteile (Fälschung) entstanden sind, sind bei dieser Ausführungsform besonders gut zu erkennen. Von der Kartenvorderseite weist lediglich das Bildzeichen 7 bei ausreichender Beleuchtung im Durchlicht holografische Effekte auf.

Versieht man die innere Schicht 11 mit fluoreszierenden Stoffen, so kann der Fluoreszenzeffekt ebenfalls bei der Prüfung der Karte mit einbezogen werden.

Die Klärung der Frage, ob es sich bei dem Merkmal 4 um ein homogen eingebettetes Element handelt, ist ebenfalls sehr einfach möglich, in dem, gegebenenfalls mittels einer speziell hierfür vorgesehenen Vorrichtung, die Karte von den Seitenkanten her beleuchtet und das Bildzeichen 4 betrachtet wird. Infolge der Lichtleitung in der inneren Schicht 11 wird das Bildzeichen in sehr charakteristischer Weise "leuchten". Falls das Merkmal 4 nachträglich eingesetzt oder aus unterschiedlichen Schichtelementen zusammengesetzt wurde, werden die zu erwartenden Lichtleiteffekte unterbunden, so daß sich ein echtes Element 4 auch bei dieser Prüfung von Nachahmungen sehr deutlich unterscheidet.

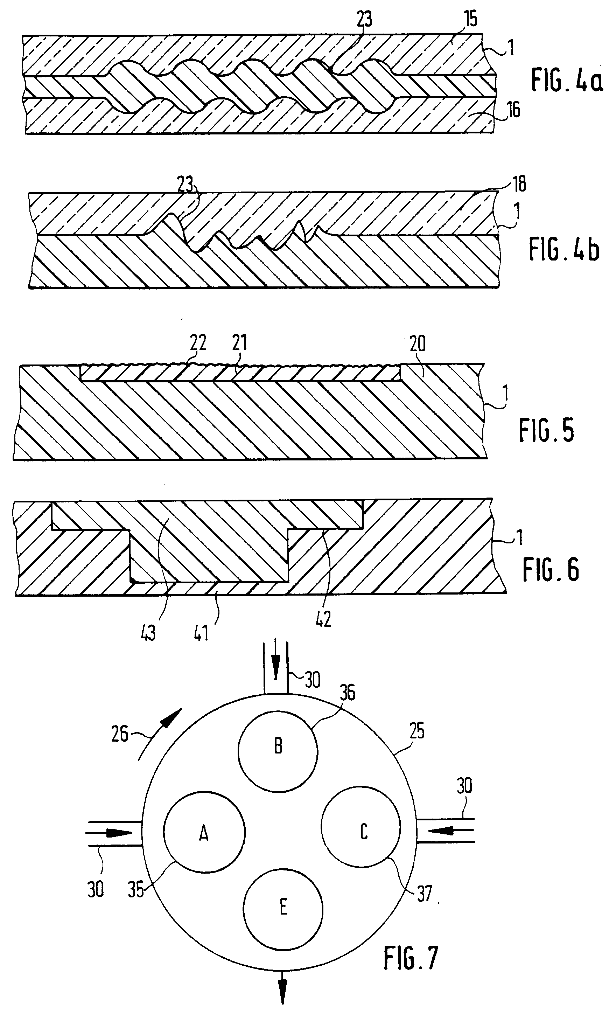

In den Fig. 4a und 4b ist eine weitere Variante des erfindungsgemäßen Kartenaufbaus erkennbar. In Fig. 4a ist eine opak ausgeführte innere Schicht 17 zwischen zwei transparenten Deckfolien 15 und 16 eingebettet. Die opake Schicht weist ein beidseitiges Oberflächenrelief 23 auf, das im Auflicht von beiden Seiten als Relief erkennbar ist. Das Relief erscheint außerdem wie bei einem echten Wasserzeichen die dünnen Bereiche dunkler als in den dicken Reliefstrukturen. Im Durchlicht ist ebenfalls wie bei einem echten Wasserzeichen eine Umkehrung des optischen Effektes zu erkennen, d. h. in diesem Fall erscheinen die dicken Reliefbereiche dunkel und die dünneren Strukturen hell.

Vom optischen Effekt her ist die in Fig. 4b wiedergegebene Ausführungsform sehr ähnlich, d. h. auch hier ist je nach Durchlicht- oder Auflichtbetrachtung eine Umkehrung der Hell-/Dunkelstrukturen zu erkennen. Der Effekt erscheint jedoch durch die transparente Schicht 18 hindurch prägnanter als von der rückseitigen Schicht 19 her.

In speziellen Ausführungsformen mag es ausreichen, lediglich ein Hologramm auf der Kartenoberfläche vorzusehen. In diesem Fall wird, wie aus Fig. 5 ersichtlich, der für das Hologramm bestimmte Kartenbereich (der sich auch über die gesamte Kartenoberfläche erstrecken kann) mit einer metallisch glänzenden Kunststoffmasse oder einem möglichst dunkel, vorzugsweise schwarz, eingefärbten Kunststoffmaterial unterlegt. Die Dicke der Schicht 21 ist dabei von geringerer Bedeutung. Im Rahmen der Erfindung ist lediglich wichtig, daß diese Schicht spritzgußtechnisch eingebracht wird und der an diese Fläche angrenzende Formraum der Spritzgußform ein holografisches Relief aufweist, das sich in die schwarze oder metallisch glänzende Oberfläche 22 abprägt.

Da die beschriebenen Schichtstrukturen und Schichtstärken relativ exakt hergestellt werden können, sind diese Effekte bei entsprechender Dimensionierung und Auslegung auch meßtechnisch sehr gut erfaßbar. Neben der visuellen Überprüfungsmöglichkeit erhält man somit gegebenenfalls durch Zugabe spezieller Stoffe zu den einzelnen Schichten des Kartenaufbaus auch die Möglichkeit Eigenschaften auszuwerten, die der visuellen Prüfung weitgehend oder völlig verborgen sind. In diesem Zusammenhang sei auf magnetische, elektrisch leitfähige oder auch im nicht sichtbaren Spektralbereich lumineszierende Effekte verwiesen.

Abweichend von den in den Fig. 3 - 5 beschriebenen Ausführungsformen, bei denen das erfindungsgemäße Prinzip zur Herstellung spezieller optischer oder meßtechnischer Effekte unter Verwendung kompatiblen Kunststoffmaterialien beschrieben wurde, ist in Fig. 6 eine Ausführungsform gezeigt, die in kompatible Kunststoffkomponenten zur Verbesserung von Produktionsvorgängen verwendet wird.

Fig. 6 zeigt einen Schnitt durch den Chipkartenbereich, in den später später ein Chipmodul eingesetzt werden soll. Dieser Bereich besteht aus dem Kartenkörper 1, in dem eine gestufte Vertiefung 42 eingebracht ist. Der Bodenbereich 41 weist etwa eine Wandstärke von 100 µm auf. Nach der Fertigstellung des Kartenrohlings wird dieser in getrennten Verfahrensschritten von beiden Seiten bedruckt. Anschließend wird ein dem Element 43 ähnliches Chipmodul eingesetzt.

Beim Bedrucken der Karten bestand bisher stets das Problem, daß der Bereich 41 dem Druck der Druckwalze nachgab und somit in diesem Bereich Fehler im Druckbild erzeugt wurden. Darüberhinaus besteht die Gefahr, daß der Bereich 41 durch mechanische Einwirkung beschädigt und der Kartenkörper somit unbrauchbar gemacht wird.

Das erfindungsgemäße Prinzip sieht nun vor, in einer der Spritzgußstationen die gestufte Vertiefung 42 mit inkompatiblen Kunststoffmaterialien auszuspritzen. Die Vertiefung ist auf diese Weise mit dem Einsatzelement 43 ausgefüllt, so daß bei anschließenden Druckvorgängen auch der Bereich 41 problemlos zu bedrucken ist. Nach Abschluß der jeweiligen Druckvorgänge wird der Kartenrohling zur Entnahme des Elements 43 beispielsweise über eine gewölbte Fläche gebogen. Auf diese Weise kann das Einsatzelement einfach entfernt und durch ein Chipmodul ersetzt werden.

Das anhand der Fig. 6 beschriebene Ausführungsbeispiel ist besonders sinnvoll bei der Herstellung von Spritzgußkarten, die in getrennten Arbeitsgängen bedruckt und anschließend mit den Chipmodulen ausgestattet werden. Die Anwendung empfiehlt sich sowohl für Einzelkarten als auch in den Fällen, in denen mit Hilfe der Spritzgußtechnik Mehrnutzenbögen herzustellen sind.

Fig. 7 zeigt den schematischen Aufbau einer Drehtisch-Spritzgußmaschine, mit der beispielsweise eine Karte in drei getrennten Spritzvorgängen (Stationen A, B und C) erstellt werden kann. Die vierte Station E ist für die Entnahme der Karte aus der Vorrichtung vorgesehen.

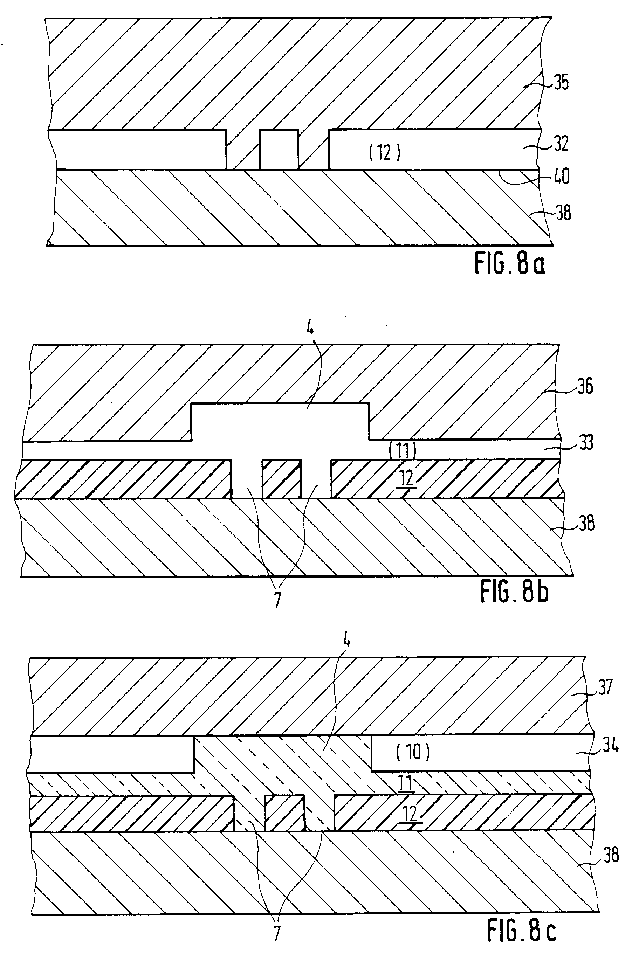

Unter Bezugnahme auf die Fig. 8a - c ist die Funktionsweise der Spritzgußform wie folgt zu beschreiben:

Die Spritzgußform besteht im Prinzip aus zwei Drehtellern, von denen der obere starr und der untere in Richtung des Pfeils 26 drehbar angeordnet ist. Der obere Drehteller ist außerdem mittels nicht dargesteller Vorrichtungselemente vertikal verschiebbar, wodurch ein Anheben und Absenken dieser Formhälfte möglich ist. Im unteren Drehteller sind im Bereich der vier Segmente A - E Vertiefungen vorgesehen, die der jeweiligen Kartenform entsprechen. Je nach Ausführungsform kann die Tiefe dieser Formbereiche variiert werden. Im vorliegenden Fall entspricht sie der späteren Kartendicke.

In den Formteilen des oberen Drehtellers sind die Strukturen der Formteile 35, 36 und 37 vorgesehen. Diese Strukturen sind den jeweils zu erzeugenden Schichtbereichen 12, 11 und 10 angepaßt.

Die unterschiedlichen Kunststoffkomponenten werden über die Materialzuführungen 30 in die Form eingespritzt. Nach jedem Spritzvorgang wird der obere Drehteller angehoben und der untere Drehteller um einen Takt weitergedreht.

Wie aus Fig. 8a ersichtlich, wird in der ersten Station (Station A) die Schicht 12 im Formraum 32 eingespritzt. Für den Fall, daß auf der rückseitigen Kartenoberfläche ein Hologrammrelief miterzeugt werden soll, ist die Oberfläche 40 mit einem derartigen Relief auszustatten. Dies kann entweder durch Ausstatten der Formoberfläche mit dem Hologrammrelief oder aber durch Einlegen von Relieffolien geschehen, die pro Karte oder nach einer bestimmten Anzahl von Spritzvorgängen auszutauschen ist.

Nachdem in der Station 1 das im beschriebenen Beispiel schwarze Kunststoffmaterial eingespritzt wurde, wird die Form soweit abgekühlt, bis die Kunststoffmasse erstarrt ist. Im Anschluß daran wird die obere Formhälfte 35 angehoben und der untere Formbereich 38, zusammen mit der Schicht 12 zur Station B transportiert. In Station B wird die für die Herstellung der Schicht 11 benötigte Formhälfte bereitgestellt. Der in der Station B zu spritzende Formraum 33 wird über der Schicht 12 positioniert und im vorliegenden Fall mit transparentem Kunststoffmaterial ausgespritzt. Während dieses Vorgangs wird sowohl die sich über die gesamte Kartenfläche erstreckende Schicht 11 als auch die im Bereich des Spritzgußmerkmals vorgesehenen Aussparungen mit transparentem Material ausgespritzt. Nach Anheben der oberen Formhälfte 36 und Weiterdrehen des unteren Drehtellers gelangt der nun zweischichtige Kartenaufbau 12,11 zur Station c. Dort wird der Kartenaufbau zum Ausspritzen der noch fehlenden Schicht 10 im Formraum 34 unter der Formhälfte 37 plaziert.

Nach erneutem Abkühlen bzw. Erstarren des Kartenmaterials wird die obere Formhälfte nochmals angehoben und der Drehteller in Pos. E zur Entnahme der Karte weitergedreht.

Für den Fachmann ist einleuchtend, daß die Einspritzvorgänge in den Stationen A, B und C jeweils parallel ablaufen, d. h. daß nach zwei Anfangstakten mit jedem Takt eine fertige Karte aus der Station E entnommen werden kann.

Es ist ebenfalls einleuchtend, daß neben den mit Hilfe der Fig. 3, 4 und 5 erläuterten Kartenmerkmalen sowohl jedes Merkmal für sich verwendbar ist, daß aber auch Kombinationen dieser Merkmale in einer Karte möglich sind. Des weiteren kann während der Herstellung dieser Karten auch die Vertiefung für das Chipmodul 2 mit eingeprägt werden. Dies kann beispielsweise mit Hilfe eines in die noch plastische Kunststoffmasse einzuprägenden beweglichen Stempels erfolgen.

Ohne das erfindungsgemäße Prinzip zu verlassen, ist es natürlich auch möglich, in den Kartenaufbau Fremdkörper mit einzubetten. Dies können beispielsweise in die Form eingeführte Sicherheitsfäden, vorgefertigte Inlettbereiche oder auch Chipmodule sein, die im letzten Arbeitsschritt in die Kunststoffmasse eingepreßt oder aber in einem vorher hergestellten Hohlraum plaziert werden.

Obwohl die Herstellung der erfindungsgemäßen Karten anhand einer Drehteller-Spritzgußmaschine beschrieben wurde, ist dem Fachmann klar, daß dies auch mit anderen Vorrichtungen, beispielsweise einer Vorrichtung möglich ist, bei der die einzelnen Stationen A, B, C in einer Reihe angeordnet sind und bei denen die unteren Formteile mit Hilfe einer Art Endlostransportsystem unter den Stationen vorbeigetaktet werden.

Bei den in den Fig. 3 - 5 beschriebenen Karten werden kompatible Kunststoffkomponenten verwendet, die die entsprechenden optischen und meßtechnischen Eigenschaften aufweisen und die sich beim "Übereinanderspritzen" im jeweiligen Übergangsbereich innig miteinander verbinden. Dem Fachmann ist klar, welche Kunststoffe diese Eigenschaft besitzen und wird diese zusammen mit den jeweiligen optischen und meßtechnischen Eigenschaften auswählen. Das gleiche gilt für inkompatible Kunststoffkomponenten, die für die Herstellung der entfernbaren Einsatzelemente 43 (Fig. 6) benötigt werden.

## Patentansprüche

1. Flacher, im Spritzgußverfahren hergestellter kartenförmiger Datenträger, insbesondere Ausweiskarte, Chipkarte oder dergleichen, wobei der Datenträger unterschiedliche Volumenbereiche aufweist, die verschiedene Kunststoffkomponenten enthalten, die zumindest bereichsweise in Schichten angeordnet und derart ausgebildet sind, daß sie visuell und/oder meßtechnisch voneinander zu unterscheiden sind, dadurch gekennzeichnet, daß die verschiedenen Kunststoffkomponenten aufeinander spritzgegossen sind.

2. Formstuck nach Anspruch 1, dadurch **gekennzeichnet,** daß die Kunststoffkomponenten zueinander kompatibel und im jeweiligen Grenzbereich miteinander unlösbar verbunden sind.

3. Kartenförmiger Datenträger nach Anspruch 1 oder 2, **dadurch gekennzeichnet, daß**
die unterschiedlichen Kunststoffkomponenten zumindest in Teilbereichen Inhomogenitäten (4, 7, 23) aufweisen, die im Durch- oder Auflicht visuell erkennbar sind.

4. Formstück nach einem oder mehreren der vorhergehenden Ansprüche, dadurch **gekennzeichnet,** daß unterschiedliche Materialkomponenten im Oberflächenbereich des Formstücks im Zusammenhang mit Reliefstrukturen, vorzugsweise Beugungsgitter- oder Hologrammstrukturen, verwendet sind.

5. Formstück nach einem oder mehreren der vorhergehenden Ansprüche, dadurch **gekennzeichnet,** daß in den äußeren Schichtbereichen Aussparungen vorgesehen sind, durch die darunterliegende Kunststoffkomponenten an die Oberfläche gelangen oder durch diese Aussparungen hindurch erkennbar sind.

6. Formstück nach einem oder mehreren der vorhergehenden Ansprüche, dadurch **gekennzeichnet,** daß zwischen mindestens zwei äußeren Schichten oder im Bereich von Schichtaussparungen aus anderen Kunststoffkomponenten gebildete Einlagerungen (43) vorgesehen sind.

7. Formstück nach Anspruch 6, dadurch **gekennzeichnet,** daß die Einlagerungen aus Kunststoffmaterialien bestehen, die zumindest zu einem Teil zu angrenzenden Kunststoffkomponenten inkompatibel sind.

8. Formstück nach Anspruch 6, dadurch **gekennzeichnet,** daß zumindest ein Teil der Einlagerungen aus umspritzten Fremdmaterialien bestehen.

9. Verfahren zur Herstellung von flachen, kartenförmigen Datenträgern, insbesondere Ausweiskarten, Chipkarten oder dergleichen, im Spritzgußverfahren, dadurch gekennzeichnet, daß der Datenträger in direkt aufeinanderfolgenden Verfahrensschritten spritzgegossen wird, wobei in den einzelnen Verfahrensschritten die verschiedenen Kunststoffkomponenten zumindest teilweise in Schichten aufeinander spritzgegossen werden und im Datenträger voneinander abgegrenzte Bereiche bilden.

10. Verfahren nach Anspruch 9, dadurch **gekennzeichnet,** daß zumindest eine der Kunststoffkomponenten zu den anderen Komponenten inkompatibel ist und die inkompatible Komponente nach Fertigstellung des Formstücks entfernt wird.

11. Vorrichtung zum Herstellen von flachen, kartenförmigen Datenträgern, insbesondere Ausweiskarten, Chipkarten oder dergleichen, im Spritzgußverfahren, **dadurch gekennzeichnet, daß**
mehrere Spritzgußstationen vorgesehen sind, die in getakteter Arbeitsweise das Spritzgießen unterschiedlicher Kunststoffkomponenenten aufeinander in Schichtform gestatten.

## Claims

1. A flat card-shaped data carrier produced by injection molding, in particular an identity card, chip card or the like, the data carrier having different volume areas containing different plastic components which are disposed in layers at least in certain areas and formed so as to be distinguishable from one another visually and/or by measuring technology, characterized in that the different plastic components are injection molded one on the other.

2. A molding according to claim 1, characterized in that the plastic components are compatible with one another and bonded together undetachably in the particular border area.

3. A card-shaped data carrier according to claim 1 or 2, characterized in that the different plastic components have at least in certain areas inhomogeneities (4, 7, 23) which are visually recognizable in transmitted or incident light.

4. A molding according to one or more of the above claims, characterized in that different material components are used in the surface area of the molding in connection with relief structures, preferably diffraction grid or hologram structures.

5. A molding according to one or more of the above claims, characterized in that the outer layer areas are provided with recesses through which plastic components located therebelow pass to the surface or are recognizable.

6. A molding according to one or more of the above claims, characterized in that embedded elements (43) formed from other plastic components are provided between at least two outer layers or in the area of layer recesses.

7. A molding according to claim 6, characterized in that the embedded elements are made of plastic materials that are at least partly incompatible with adjacent plastic components.

8. A molding according to claim 6, characterized in that at least some of the embedded elements consist of foreign materials surrounded by injection molding.

9. A method for producing flat card-shaped data carriers, in particular identity cards, chip cards or the like, by injection molding, characterized in that the data carrier is injection molded in directly successive method steps, the different plastic components being injection molded one on the other at least partly in layers in the individual method steps and forming mutually delimited areas in the data carrier.

10. A method according to claim 9, characterized in that at least one of the plastic components is incompatible with the other components and the incompatible component is removed after the molding is completed.

11. An apparatus for producing flat card-shaped data carriers, in particular identity cards, chip cards or the like, by injection molding, characterized in that a plurality of injection molding units are provided that permit injection molding of different plastic components one on the other in layer form in phased operation.

## Revendications

1. Support de données plat, sous forme de carte et fabriqué selon le procédé de moulage par injection, en particulier carte d'identité, carte à puce ou similaires, le support de données présentant différentes zones de volume qui comportent différents composants de matière plastique qui sont disposées, au moins par endroit, en couches et sont réalisées de telle sorte qu'elles peuvent être distinguées l'une de l'autre de façon visuelle et/ou par technique de mesure, caractérisé en ce que les différents composants de matière plastique sont moulés par injection l'un sur l'autre.

2. Pièce moulée selon la revendication 1, caractérisée en ce que les composants de matière plastique sont assemblés de façon à être compatibles l'un avec l'autre et inamovibles l'un par rapport à l'autre dans la zone d'interface respective.

3. Support de données selon la revendication 1 ou 2, caractérisé en ce que les différents composants de matière plastique présentent, au moins dans des zones partielles, des inhomogénéités (4, 7, 23) qui sont détectables visuellement en lumière transmise ou incidente.

4. Pièce moulée selon l'une ou plusieurs des revendications précédentes, caractérisée en ce que différents composants de matière sont utilisés dans la partie superficielle de la pièce moulée dans le cadre de structures en relief, de préférence de structures à réseau de diffraction ou de structures holographiques.

5. Pièce moulée selon l'une ou plusieurs des revendications précédentes, caractérisée en ce que, dans les zones extérieures en couches, il est prévu des évidements à travers lesquels des composants de matière plastique situés dessous arrivent à la surface ou sont reconnaissables à travers ces évidements.

6. Pièce moulée selon l'une ou plusieurs des revendications précédentes, caractérisée en ce que, entre au moins deux couches extérieures ou dans la zone des évidements des couches, sont prévues des inclusions (43) réalisées dans d'autres composants de matière plastique.

7. Pièce moulée selon la revendication 6, caractérisée en ce que les inclusions sont en des matières plastiques qui, au moins en Partie, sont incompatibles avec des composants adjacents de matière plastique.

8. Pièce moulée selon la revendication 6, caractérisée en ce qu'au moins une partie des inclusions est réalisée dans des matières étrangères surmoulées par injection.

9. Procédé de fabrication de supports de données plats en forme de carte, en particulier cartes d'identité, cartes à puce ou similaires, selon le procédé de moulage par injection, caractérisé en ce que le support de données est moulé par injection selon un procédé présentant des étapes directement successives, dans lequel, au cours des étapes individuelles du procédé, les différents composants de matière plastique sont, au moins en partie, moulés par injection l'un sur l'autre, en couches, et forment des zones délimitées l'une par rapport à l'autre dans le support de données.

10. Procédé selon la revendication 9, caractérisé en ce que, au moins l'un des composants de matière plastique est incompatible avec les autres composants et en ce que le composant incompatible est enlevé après achèvement de la pièce moulée.

11. Dispositif de fabrication de supports de donnée plats, sous forme de carte, en particulier cartes d'identité, cartes à puce ou similaires, et fabriqués selon le procédé de moulage par injection, caractérisé en ce qu'il est prévu plusieurs stations de moulage par injection qui, selon une manière de travail cadencée, permettent le moulage par injection de différents composants de matière plastique, l'un sur l'autre, sous forme de couche.
